# EUROPÄISCHE PATENTSCHRIFT

(11) **EP 1 777 095 B1**
(45) Veröffentlichungstag und Bekanntmachung des Hinweises auf die Patenterteilung: **08.06.2011**
(21) Anmeldenummer: 06022024.1
(22) Anmeldetag: 20.10.2006
(51) Int. Cl.: B60K 26/02, G05G 1/30

(54) **Fahrpedal für ein Kraftfahrzeug**
Accelerator pedal for motor vehicle
Pédale d'accélération pour automobile

(30) Priorität: 21.10.2005 DE 102005050936; 20.12.2005 DE 102005061277
(43) Veröffentlichungstag der Anmeldung: 25.04.2007
(73) Patentinhaber: AB Elektronik GmbH, 59368 Werne (DE)
(72) Erfinder: Apel, Peter, 59394 Südkirchen (DE); Driftmeyer, Michael, 58708 Menden (DE)
(74) Vertreter: Wenzel & Kalkoff

(56) Entgegenhaltungen:
- WO-A-03/038379
- DE-A1- 10 121 317
- DE-A1- 10 250 456
- US-B1- 6 318 208

## Beschreibung

Die Erfindung betrifft ein Fahrpedal für ein Kfz.

Heute bekannte Fahrpedalelemente umfassen ein Basisteil zur festen Anordnung in Kfz und ein Pedalteil, das gegenüber dem Basisteil schwenkbar ist. In heute bekannten Driveby-Wire-Systemen ist ein Sensor zur Ermittlung der Pedalstellung vorgesehen.

In der DE-A-197 55 098 ist ein Fahrpedal offenbart, bei dem am Grundelement eine FederDämpfer-Einheit vorgesehen ist, die der Betätigungsbewegung des Pedalelements eine Federkraft einerseits und eine Reibkraft andererseits entgegensetzt. Die Feder-Dämpfer-Einheit ist als Federtopf mit verschieblichen Kolben ausgebildet. Ein Linearpotentiometer ist zur Ermittlung der Pedalstellung vorgesehen. Das Pedalelement ist mittels eines Filmgelenks schwenkbar am Basisteil angebracht.

In der DE-A-197 32 340 ist ein Fahrpedal für ein Kfz gezeigt. Als Rückstellelemente dienen zwei Blattfedern, wobei sich ein gleitender Kontakt zwischen der Rückstelleinrichtung und dem Pedalteil einstellt. Die Pedalstellung wird durch Potentiometer, oder alternativ berührungslos wirkende Wegaufnehmer, sowie als weitere Alternative ein Dehnungsmeßstreifen am Blattfederelement vorgesehen.

In der DE-A-102 55 712 ist ein hängendes Pedal, ebenfalls mit einem Basisteil und einem schwenkbar daran angeordneten Pedalteil gezeigt. Die Pedalstellung wird durch einen berührungslos arbeitenden Linearsensor ermittelt. Bei Bewegung des Pedalteils bewegt sich ein Cursorelement. Die Aufnahme eines Sensorwertes ist möglich mit einer nicht näher beschriebenen Spulenanordnung auf einer Leiterplatte. Damit bei Einwirken seitlicher Kräfte durch das Spiel an der Lagerstelle des Basisteils keine Verkippung auftritt, die zu Meßfehlern führen würde, ist das Cursorelement über einen Stift, der in einer Buchse des oberen Hebelarms des Fahrpedalelements eingesetzt ist, an das Pedalteil gekoppelt.

Die US 6,318,208 beschreibt ein elektronisches Gaspedal mit flachem Profil. Ein Basisteil ist zur Montage auf dem Boden eines Fahrzeugs vorgesehen und ein Pedal ist schwenkbar mit dem Basisteil verbunden. Ein oberer Pedalteil ist zur Bedienung vorgesehen, während sich ein unterer Pedalteil durch den Boden in einen dortigen Raum erstreckt. Ein elektronischer Gaspedal-Positionssensor mit einem Antriebsverbindungsmechanismus ist mit dem unteren Pedalteil verbunden am Basisteil angebracht. Die Verbindung umfasst zwei miteinander gekoppelte Brücken, um die translatorische Bewegung des Pedals in eine Rotation am Positionssensor umzusetzen.

In der DE 101 21 317 ist eine Pedaleinrichtung zum Ansteuern eines Motors eines Kraftfahrzeuges nach dem Oberbegriff des Anspruchs 1 offenbart.

Es ist Aufgabe der Erfindung, ein Fahrpedal mit einem einfachen Aufbau vorzuschlagen, bei dem der Pedalsensor die Pedalstellung sehr genau und ohne Störungen, insbesondere bei seitlichen Belastungen, ermitteln kann.

Die Aufgabe wird gelöst durch ein Fahrpedal gemäß Anspruch 1. Abhängige Ansprüche beziehen sich auf vorteilhafte Ausführungsformen der Erfindung.

Bei dem erfindungsgemäßen Fahrpedal ist ein induktiver Sensor zur Ermittlung der Stellung des Pedalteils vorgesehen. Der Sensor weist einen Spulenschaltkreis mit mindestens einer Sende- und mindestens einer Empfangsspule auf. Ein induktives Koppelelement bewegt sich bei Bewegung des Pedalteils vor dem Spulenschaltkreis. Die Position des induktiven Koppelelements vor dem Spulenschaltkreis kann durch eine durch dieses Element bewirkte positionsabhängige Überkopplung von der bzw. den Sendespule(n) in die Empfangsspule(n) ermittelt werden. Der Spulenschaltkreis ist am Basisteil angeordnet. Der Sensor ist, - im Gegensatz zu bekannten Drehsensoren, die um den Bereich der Drehachse angeordnet sind - bevorzugt als Linearsensor ausgebildet.

Erfindungsgemäß ist nun das Koppelelement allerdings nicht direkt am Pedalteil angeordnet. Stattdessen ist ein Hebelelement vorgesehen, an dem das Koppelelement befestigt ist. Das Hebelelement ist am Grundelement schwenkbar gelagert. Es ist mit dem Pedalteil gekoppelt, so daß bei Bewegung des Pedalelements auch das Hebelelement verschwenkt. Diese Kopplung erfolgt durch einseitige Anlage.

Das Hebelelement ist erfindungsgemäß am Basisteil an einem Achsteil schwenkbar gelagert. Hierbei wird aus Gründen der sprachlichen Vereinfachung nicht zwischen einer (mit dem Hebelelement mitdrehenden) Welle und einer (fest am Basisteil angeordneten) Achse unterschieden, sondern beide Möglichkeiten werden gemeinsam als "Achsteil" bezeichnet. Das Achsteil dient zur Führung der schwenkbaren Lagerung, insbesondere gegenüber Querbeanspruchungen, so daß die Lagerung an dem Achsteil ein geringes Querspiel aufweist. Erfindungsgemäß ist ferner mindestens eine, bevorzugt zwei Rückstellfeder(n) zur Rückstellung des Hebelelements vorgesehen. Besonders bevorzugt ist es, wenn die Federn auch zur Rückstellung des Pedalteils dienen, indem das Hebelelement das Pedatteil zurükstellt. Durch die Anbringung einer Rückstellfeder am Hebelelement ist sichergestellt, daß auch das Hebelelement - und nicht lediglich das Pedalteil - bei Nichtbetätigung sicher zurückgestellt wird und so im Fall irgendwelcher Fehlfunktionen ein unbeabsichtigtes Gasgeben ausgeschlossen ist. Durch die Federn wird ferner das Hebelelement gegen das Pedalteil gedrückt, so dass es dessen Bewegung stets spielfrei folgt.

Die Schwenkachse des Pedalteils wird hier als "Pedal-Schwenkachse", und die des Hebelelements als "Hebel-Schwenkachse" bezeichnet. Die beiden Begriffe sind hierbei geometrisch im Sinne des Drehpunktes zuverstehen; es muß sich nicht um tatsächlich vorhandene Achselemente handeln. Die beiden Schwenkachsen sind parallel im Abstand voneinander angeordnet. Erfindungsgemäß ist eine Kopplung der Bewegung in Schwenkrichtung vorgesehen durch einseitige Anlage.

Die Entkopplung des von außen oft relativ grob beanspruchten Pedalteils, auf das auch Querkräfte wirken können, von dem Pedalsensor führt dazu, daß die Ermittlung der Pedalstellung in Schwenkrichtung exakt und ohne Störungen erfolgen kann. Das Hebelelement ist zwar bezüglich der Schwenkbewegung mit dem Pedalteil gekoppelt, stellt jedoch ein eigenständig mit geringem Spiel gelagertes Schwenkelement dar. Es ist somit weit weniger von Querbelastungen und ähnlichen Einflüssen betroffen.

Die Schwenklagerung des Pedalteils hingegen kann relativ einfach ausgeführt sein, bspw. als Filmgelenk. Die Art der Lagerung ist hierbei durch das Hebelelement von der Ermittlung des Sensorwertes entkoppelt.

Das erfindungsgemäße Fahrpedal kann sowohl als hängendes Pedal als auch als stehendes Pedal ausgeführt sein.

Gemäß einer Weiterbildung der Erfindung ist vorgesehen, daß das Koppelelement am Ende des Hebelelements angeordnet ist. So ergibt sich ein relativ langer Weg. der mit einem Linearsensor (Wegsensor) genau zu erfassen ist. Der Spulenschaltkreis ist neben dem Koppelelement angeordnet, so daß sich das Koppelelement auf seinem Weg vor dem Spulenschaltkreis bewegt. Einerseits ist es möglich, daß der Spulenschaltkreis seitlich neben dem Hebel angeordnet ist, so daß sich das Koppelelement im Bereich des Hebelendes in einem Bogen, aber mit gleichbleibendem Abstand vor dem Spulenschaltkreis bewegt. Gemäß einer Weiterbildung bevorzugt ist aber, daß der Spulenschaltkreis in der Verlängerung des Hebelelements angeordnet ist. So ergibt sich eine besonders schlanke Bauform entsprechend der ohnehin länglichen Form des Fußpedals. Der Spulenschaltkreiskann - entsprechend der vom Koppelelement beschriebenen leicht bogenförmigen Bahn - eine Krümmung aufweisen. Bevorzugt ist aber, daß der Spulenschaltkreis gerade ist, bspw. als herkömmliche Leiterplatte. Die Herstellung ist dann besonders einfach und kostengünstig. Zwar ergibt sich durch die leicht bogenförmige Bahn ein variabler Abstand des Koppelelements über dem Spulenechaltkreis. Das Auftreten von Meßfehlern hierbei kann aber vermieden werden, weun ein in dieser Hinsicht robuster induktiver Sensor, wie er bspw. in der WO-A-03/038379 beschrieben ist, verwendet wird. Im Übrigen ist es auch möglich, evtl. Meßfehler durch entsprechend Kalibrierung zu minimieren.

Zur Lagerung des Pedalteils am Basisteil kann ein Filmgelenk vorgesehen sein. Aufgrund der Entkopplung des Sensors durch das Hebelelement spielt die Genauigkeit der Lagerung des Pedalteils keine besondere Rolle mehr.

Für die Lagerung des Hebelelements ist gemäß einer Weiterbildung bevorzugt, daß ein Achsteil am Basisteil angeordnet ist. Hierbei kann es sich um jede Form eines Achsteils handeln, also ein Lagerteil von - mindestens im Wesentlichen - rundem Querschnitt, das von einer am Hebelelement gebildeten Aufnahmebuchse mindestens teilweise umfaßt wird. Für die exakte Lagerung der Buchse am Achsteil kommt es auf das Spiel zwischen diesen beiden Teilen an. Um das Spiel möglichst gering zu halten, ist bevorzugt daß die Aufnahmebuchse mindestens aus einem ersten Buchsenteil und einem zweiten Buchsenteil besteht, wobei die Buchsenteile gegeneinander verspannt sind. Sie klemmen dann den Achsteilzwischen sich ein, was zu einer Lagerung mit sehr geringem Spiel führt. Durch das Einklemmen wird zudem eine gewisse Reibung erzeugt, die für ein gewünschtes Hystereseverhalten des Pedals sorgt. Das jeweils gewünschte Reibmoment kann beeinflußt werden einerseits durch die Kraft der Einspannung und andererseits durch die jeweiligen Oberflächen der Reibpartner. Um ein hohes Reibmoment zuverlässig zu erreichen sollte eine möglichst große Fläche zur Verfügung stehen. Deshalb wird ein relativ großer Durchmesser des des Achsteils von bspw. mehr als 5 mm, bevorzugt mehr als 10 mm, besonders bevorzugt mehr als 15 mm gewählt, bevorzugt bis maximal 80 mm, besonders bevorzugt bis 60 mm.

Gemäß einer wesentlichen Weiterbildung der Erfindung ist der Spulenschaltkreis Teil eines Sensormoduls. Das Sensormodul kann als separate Einheit gefertigt und erst dann am Basisteil befestigt werden. Das Sensormodul umfaßt außer dem Spulenschaltkreis - der bevorzugt in Form einer Leiterplatte mit darauf gebildeten flachen Spulenstrukturen eines induktiven Sensors ausgebildet ist - einen Anschlußstecker mit Kontakten und einem Steckergehäuse. Die Kontakte sind mit dem Spulenschaltkreis verbunden. Bevorzugt ist außerdem, daß das Sensormodul zusätzlich noch eine Ansteuerungs- und Auswertungselektronik für den Spulenschaltkreis beinhaltet, bspw. als auf der Leiterplatte angebrachte integrierte Schaltung. Der Stecker dient dann nach Einbau im Kfz zur Herstellung einer elektrischen Verbindung mit der Spannungsversorgung und Motorsteuerung.

Die Fertigung eines Fahrpedals durch Anbringen eines separaten Sensormoduls ist sehr einfach. Entsprechende Halterungen können am Basisteil vorgesehen sein. So kann das Sensormodul separat vorbereitet und dann am Grundelement befestigt, bevorzugt eingeschoben werden. Führungen und/oder Verrastungen für den Einschub eines solchen Sensormoduls können am Basisteil vorgesehen sein. Durch die Ausführung als Sensormodul, das in Führungen aufgenommen ist wird gewährleistet, dass auch bei starken Mißbrauchskräften auf das Fahrpedal die empfindlichen Bestandteile des Moduls weitgehend von schädlichem Einfluß einwirkender Kräfte frei bleiben.

Im folgenden werden Ausführungsformen der Erfindung anhand von Zeichnungen näher beschrieben. In den Zeichnungen zeigen:
- Fig. 1: eine perspektivische Darstellung einer Ausführungsform eines Fahrpedals;
- Fig. 2: eine Querschnittsansicht des Fahrpedals aus Fig. 1;
- Fig. 3: in perspektivischer Ansicht eine Explosionsdarstellung des Fahrpedals aus Fig. 1, Fig. 2;
- Fig. 4: eine perspektivische Ansicht einer Explosionsdarstellung einer Ausführungsform eines Sensormoduls des Fahrpedals aus Fig. 1 - 3;
- Fig. 4a: eine perspektivische Ansicht von Elementen des Sensormoduls aus Fig. 4;
- Fig. 5: in perspektivischer Ansicht eine Explosionsdarstellung von Elementen einer Sensorhebelvorrichtung des Fahrpedals aus Fig. 1 - 3;
- Fig. 6.: in perspektivischer Ansicht eine weitere Explosionsdarstellung des Fahrpedals aus Fig. 1.

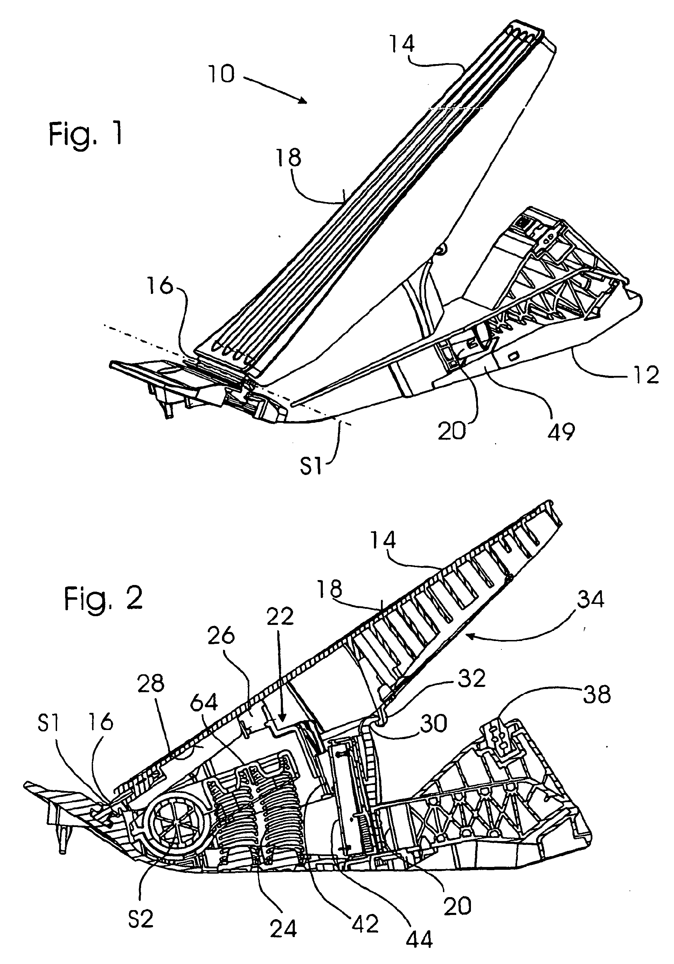

Fig. 1 zeigt in perspektivischer Ansicht ein Fahrpedal 10, das in Fig. 2 noch einmal in einer Querschnittsansicht zu sehen ist. Das Fahrpedal 10 umfaßt ein im Kfz fest anzuordnendes Gehäuseteil - Grundelement 12 - an dem über ein Filmgelenk 16 ein Pedalteil 14 mit einer Pedalplatte 18 so angebracht ist, daß er um eine Schwenkachse S1 verschwenkbar ist. Grundelement 12 und Pedalteil 14 bestehen aus Kunststoff.

Am Grundelement 12 ist ein Stecker 20 mit einem Steckergehäuse und darin angeordneten elektrischen Kontakten vorgesehen. Über den Stecker 20 wird das Fahrpedal 10 in einem Kfz elektrisch angeschlossen, wobei es, wie im weiteren noch näher beschrieben wird, den jeweils aktuellen Wert der Schwenkstellung des Pedalteils 14 als Sensorwert ermittelt und als elektrisches Signal - digital oder analog - am Stecker 20 ausgibt. Die entsprechenden Signale werden im Kfz von einer Steuereinheit - ECU - verarbeitet.

Das Fahrpedal 10 weist einen Sensorhebel 22 auf, der am Basisteil 12 ebenfalls schwenkbar gelagert ist, und zwar um eine Schwenkachse S2. Die Schwenkachse S2 verläuft parallel im Abstand zur Schwenkachse S1. Zwischen dem Basisteil 12 und dem Hebel 22 sind zwei Spiralfedern 24 vorgesehen, die den Hebel 22 nach oben drücken. Der Hebel 22 liegt über eine am oberen Ende gebildete Nase 26 am Pedalteil 14 an, und zwar an der Innenfläche 28 der Pedalplatte 18. Durch die Kraft der Federn 24 wird die Nase 26 des Pedalhebels 22 stets fest gegen diese Fläche gedrückt. So werden durch die Kraft der Federn 24 sowohl der Hebel 22 als auch das Pedalelement 14 stets in Richtung einer Leerlaufstellung zurückgestellt. Durch die Federbelastung ist auch sichergestellt, dass der Sensorhebel 22 der Bewegung des Pedalteils 14 stets spielfrei folgt. Die Leerlaufstellung ist begrenzt durch das Zusammenwirken von zwei Hakenelementen, einem ersten Hakenelement 30 am Basisteil 12 und einem zweiten Hakenelement 32 am Pedalteil 14.

Somit ist ein Endanschlag direkt am Pedalteil 14 vorgesehen. In der in Figur 2 gezeigten Leerlaufstellung stehen die Federn 24 unter Vorspannung. Die Nase 26 des Hebels 22 ist gegen die Unterseite des Pedalteils 14 gedrückt. So ist sichergestellt, daß das Pedalteil 14 in der Leerlaufstellung fest eingespannt ist und daher nicht unvorteilhaft wackeln kann.

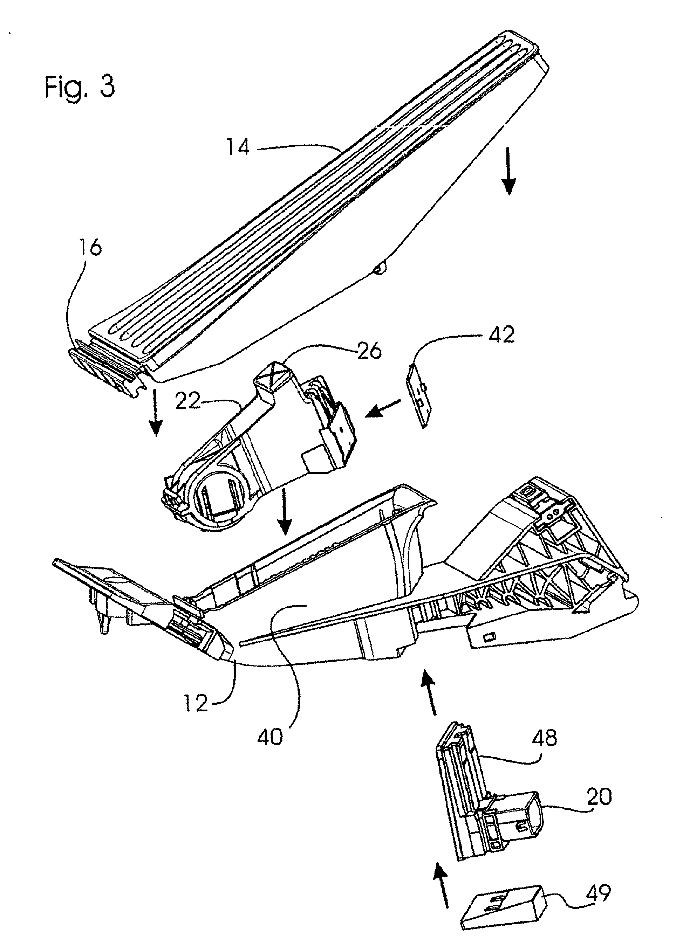

In Fig. 3 sind die Baueinheiten des Fahrpedals 10 in Explosionsdarstellung gezeigt.

Am Pedalteil 14 ist das Filmgelenk 16 angespritzt, das beim Zusammenbau von der Seite in einen Schlitz am Basisteil 12 eingeschoben wird.

Das Basisteil 12 umfaßt einen nach oben offenen, aber zu den Seiten geschlossenen Gehäusebereich 40 zur Aufnahme des Hebels 22.

Bei dem Fahrpedal 10 ist zur Ermittlung der Stellung des Pedalteils 14 ein induktiver Sensor vorgeshen. Hierbei handelt es sich um einen Linearsensor, bei dem der Weg eines Koppelelements 42 über einem Spulenschaltkreis 44 detektiert wird. Ein derartiger Sensortyp ist dem Fachmann an sich bekannt. Bevorzugt wird ein induktiver Linearsensor, wie er beispielsweise in der WO-A-03/038379 beschrieben ist. Hierbei ist das induktive Koppelelement 42 als Resonanzkreis mit mindestens einer Induktivität und einer Kapazität ausgebildet. Der Spulenschaltkreis 44 weist zwei entlang des Sensorbereiches, d.h. des Weges des Koppelelements, räumlich in Quadratur angeordnete Erregerspulen sowie eine darum als Schleife angeordnete Empfängerspule (nicht dargestellt) auf. Die Erregerspulen werden wie in WO-A-03/038379 beschrieben bestromt. Das induktive Koppelelement 42 bewirkt eine von seiner Position zum Spulenkreislauf 44 abhängige Kopplung zwischen den Erregerspulen und der Empfängerspule, so daß sich aus den Signalen in der Empfängerspule exakt die Position des Koppelelements 42 ermitteln läßt. Die Verwendung eines Resonanzkreises als induktives Koppelelement ist zwar vorteilhaft, weil bei Anregung im Bereich der Resonanzfrequenz hohe Signalstärken erreicht werden. Unter Verzicht auf diesen besonderen Vorteil kann das Koppelelement aber auch einfacher ausgebildet sein, beispielsweise als Leiterschleife, Ferritelement oder Ähnliches. Ebenso sind vergleichbare induktive Sensoren bekannt, die mit unterschiedlichen Anzahlen von Erreger- und Empfängerspulen arbeiten.

Bei dem gezeigten Fahrpedal 10 ist der induktive Sensor redundant ausgelegt. Um die Ausfallsicherheit zu erhöhen, umfasst der Spulenschaltkreis 44 nicht nur einen Spulensatz bestehend aus zwei Erregerspulen und einer Empfängerspule, sondern es sind zwei vollständige Spulensätze enthalten. Gleichzeitig weist das induktive Koppelelement 42 zwei separate Resonanzkreise auf. Die Resonanzkreise sind hierbei mit unterschiedlichen Kapazitäten bestückt, so dass sie unterschiedliche Resonanzfrequenzen haben. Die Koppelelemente sind hierdurch voneinander unterscheidbar, so dass die beiden Teile des redundant ausgelegten Sensors jeweils unabhängig voneinander arbeiten, ohne sich gegenseitig zu beeinflußen. Hierbei wird der erste Spulensatz auf der Resonanzfrequenz des ersten Resonanzkreises und der zweite Spulensatz auf der Resonanzfrequenz des zweiten Resonanzkreises des Koppelelements 42 betrieben. In alternativen Ausgestaltungen ist es auch möglich, eine noch größere Anzahl von unterscheidbaren Koppelelementen vorzusehen, oder die Position verschiedener Koppelelemente mit nur einem Spulensatz zu ermitteln, der abwechselnd auf verschiedenen Frequenzen betrieben wird.

Im Gegensatz zu Rotationssensoren, die im Bereich der Drehachse eines drehenden Teils angebracht sind und die Drehung dieses Teils um die Drehachse ermitteln wird bei dem Fahrpedal 10 ein induktiver Linerarsensor eingesetzt. Hier wird die Schwenkposition des Hebels 22 erfaßt, und zwar außerhalb von dessen Drehachse S2. Am Ende des Hebels 22 ist das in diesem Fall als Leiterplättchen mit einem Resonanzkreis ausgebildete Koppelelement 42 aufgesetzt. Der beim Verschwenken des Hebels 22 leicht bogenförmige Weg des Koppelelements 42 wird durch den in Verlängerung des Hebels angeordneten Spulenschaltkreis 44 ermittelt.

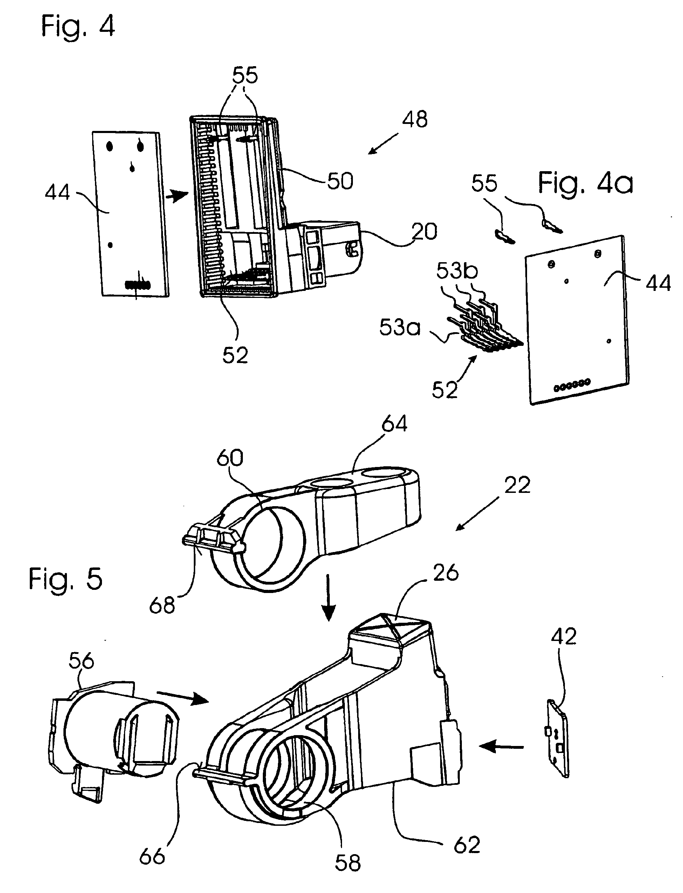

Hierbei ist der Spulenschaltkreis, wie in Fig. 3, Fig. 4 erkennbar, Teil eines Sensormoduls 48. Das Sensormodul 48 umfaßt den bereits erwähnten Stecker 20 mit einem umlaufenden Steckergehäuse und darin vorstehenden elektrischen Kontakten. Einstückig mit dem Steckergehäuse ausgebildet ist ein Modulgehäuse 50. Steckergehäuse und Modulgehäuse 50 sind im Spritzgußverfahren aus Kunststoff hergestellt, wobei Kontaktbahnen aus leitfähigem Metallblech so in das Kunststoff-Material eingebettet sind, daß sie innerhalb des Steckers 20 vorstehenden Kontakte bilden und innerhalb des Modulgehäuses 50 Kontakte 52 zum Anschluß an den als Leiterplatte ausgebildeten Spulenschaltkreis 44 vorstehen. Die Herstellung des Moduls 48 mit teilweise eingebetteten Stanzgittern ist besonders wirtschaftlich.

Die auch als "Stanzgitter" bezeichneten parallel zueinander angeordneten flachen Stege 52 aus Blech werden durch Stanzen hergestellt. Wie aus Fig. 4a ersichtlich, umfaßt das Modul zwei Gruppen von derartigen Stegen: Die jeweils identischen Stege 53a einer ersten Gruppe verlaufen im wesentlichen gerade und sind parallel angeordnet, während drei ebenfalls identisch geformte Stege 53b einer zweiten Gruppe, die mit den Stegen 53a der ersten Gruppe abwechselnd angeordnet sind, hakenförmig ausgebildet sind. Die Stege 53a, 53b verlaufen im Inneren des Kunststoffmaterials des Gehäuses 50 zum Stecker 20, wobei die erste Gruppe von Stegen 53a die untere Reihe von Steckkontakten bildet und die zweite Gruppe von Stegen 53b die obere Reihe.

Bei dem Modul 48 ist die Leiterplatte 44 winklig unter 90° zur Steckrichtung des Steckers 20 angeordnet. So kann eine Verbindung mit Hilfe der Stanzgitter besonders wirtschaftlich hergestellt werden, da nur zwei unterschiedliche Gruppen von Stanzgittern benötigt werden.

Auf der Leiterplatte 44 sind die für den induktiven Sensor benötigten Spulen als flache Leiterstruktur aufgebracht. Die Leiterplatte 44 wird mit dem Modulgehäuse 50 verbunden, wobei die daraus vorstehenden Kontakte 52 in entsprechende Bohrungen der Leiterplatte 44 eingesetzt und dort eingepresst und/oder verlötet werden. Auf der gegenüberliegenden Seite wird die Leiterplatte 44 durch Blindpfosten 55 gehalten. So wird das Sensormodul 48 als separate Einheit hergestellt.

Auf der Leiterplatte 44 befindet sich außer dem Spulenschaltkreis auch die notwendige Beschaltung zur Ansteuerung der Erregerspulen und Auswertung des Signals der Empfängerspule. Diese ist in Form eines integrierten Bausteins, ASIC, mit diskreten Bauelementen als Schutzbeschaltung vorgesehen. Das Sensormodul 48 beinhaltet somit alle stationären elektrisch wirksamen Teile des induktiven Sensors, mit dem die Position des Koppelelements 42 festgestellt werden kann. Der ASIC wertet die empfangenen Signale aus und liefert am Stecker 20 die so ermittelte Position des Koppelelements 42.

Bei der Montage des Fahrpedals 10 wird das Sensormodul 48 vormontiert und wie aus Fig. 3 ersichtlich von unten in das Basisteil 12 des Fahrpedals 10 eingeschoben. Das Basisteil 12 verfügt über entsprechende Schienenführungen. In der endgültigen Position wird das Sensormodul 48 gegen einen Anschlag gedrückt und durch einen Verriegelungsdeckel 49 fixiert. Das Sensormodul 48 ist so exakt und sicher positioniert und gehalten.

In Fig. 2 ist erkennbar, wie sich das Koppelelement 42 am Hebel 22 vor dem Spulenschaltkreis 44 bewegt. So kann die Position des Hebels 22 exakt ermittelt werden.

Das Sensormodul 48 hat als separate Baueinheit mit eigenem Gehäuse, die komplett am Basisteil 12 aufgenommen ist den Vorteil, dass seine funktionellen Bestandteile, d. h. insbesondere der ASIC sowie die Verbindungen der Kontakte mit den Bauelementen und der Leiterplatte auch bei starken Mißbrauchskräften auf das Fahrpedal 10 weitgehend vom schädlichen Einfluß einwirkender Kräfte frei bleiben.

Wie aus Fig. 3 ersichtlich befindet sich das Koppelelement 42, und ebenso der davor angeordnete Spulenschaltkreis 44 nicht gerade innerhalb des Basisteils 12, sondern ist gegenüber diesem schräg angeordnet. Die Normale der durch die Leiterplatte 44 gebildeten Fläche ist nicht parallel zur Längsrichtung des Pedals, sondern ist um ca. 30° schräg zu dieser angeordnet. So wird einerseits erreicht, daß bei einfacher, nämlich winkliger, Ausführung des Steckers 20 dieser trotzdem, wie aus Fig. 1 ersichtlich, von der Seite erreicht werden kann. Andererseits wird durch den schrägen Einbau erreicht, daß der durch die Geometrie vorgegebene variable Abstand des Koppelelements 42 (das einen Bogen beschreibt) über der Leiterplatte 44 (die gerade ist) verringert wird. Trotzdem ist weiterhin der Spulenschaltkreis 44 in der Verlängerung des Hebels 22 angeordnet, so daß die längliche Bauform des Pedals beibehalten bleibt.

Im Betrieb des Fahrpedals bewegt sich der Hebel 22 stets mit dem vom Fahrer bedienten Pedalteil 14. Durch die Federn 24 liegt der Hebel 22 (mit seiner Nase 26) stets am Pedalteil 14 an. Deshalb bewegt sich das am Hebel 22 angebrachte Koppelelement 42 auch stets mit dem Pedalteil 14. Die Aufnahme des Weges des Koppelelements 42 durch das Sensormodul 48 liefert damit die exakte Pedalposition.

Während allerdings das Pedalelement 14 in einem Filmgelenk 16 gelagert ist, besitzt der Hebel 22 eine eigene Lagerung.

In Fig. 5 ist der Sensorhebel 22 in einer Explosionsdarstellung gemeinsam mit seinem Lagerelement gezeigt. Als Lagerelement dient ein Achsteil 56, das in das Gehäuse 40 des Basisteils 12 eingeschoben und dort durch Verrastung fixiert wird. Das Achsteil 56 ist aus Kunststoff hergestellt und umfaßt ein rundes Achselement von relativ großem Durchmesser, im gezeigten Beispiel ca. 22 mm. Dieses Achsteil wird eingeschoben in eine am Hebel 22 gebildete Hülse, die einen äußeren Hülsenteil 58 und einen inneren Hülsenteil 60 umfaßt. Der Hebel 22 ist selbst zweigeteilt, wobei an einem äußeren Hebelteil 62 der äußere Hülsenteil 58 gebildet ist, und an einem inneren Hebelteil 64 der inneren Hülsenteil 60 gebildet ist. Der innere und äußere Hebelteil 62, 64 liegen im zusammengebauten Zustand mit Anlageflächen 66 (am äußeren Hebelteil 62) und 68 (am inneren Hebelteil 64) aufeinander. Die Federelemente 24, wirken wie aus Fig. 2 ersichtlich, direkt nur auf den inneren Hebelteil 64. Bei eingeschobenem Achsteil 56 ergibt sich so zwischen den Buchsenteilen 58, 60 eine Verspannung, so daß die gebildete zweiteilige Buchse das Achsteil 56 einklemmt. Durch diese Einklemmung ergibt sich eine besonders intensive Anlage und damit besonders genaue Führung des Hebels 22 mit minimalem Querspiel.

Durch die Verspannung ergibt sich weiter eine definierte, gewünschte Reibung zwischen dem Hebel 22 und dem Achsteil 56. Diese Reibung wird zur Erzeugung der für Drive-By-Wire-Fahrpedale benötigten Hysterese genutzt. Die Erzeugung von Reibung im Bereich des Kontaktes zwischen der Nase 26 des Hebels 22 und der Unterseite 28 der Fahrpedalplatte 18 hat sich hingegen als nicht vorteilhaft erwiesen. Die so erzeugte Reibung wäre z.T. schwer kontrollierbar, und es können sich Stick-/Slip-Effekte ergeben. Bevorzugt ist die Nase 28 deshalb mit einem Gleitbelag versehen, der für ein besonders leichtes Gleiten ohne zusätzliche spürbare Reibung sorgt. Alternativ kann der Hebel 22 mit Nase 26 vollständig aus einem Material bestehen, das eine geringe Reibung mit der Unterseite 28 des Pedals aufweist.

Das Fahrpedal 10 verfügt über eine Kickdown-Vorrichtung 34. Beim Niederdrücken des Pedalteils 14 in Betätigungsrichtung kommt eine Auslösefläche 38 am Basis-Element 12 in Eingriff mit einer Kickdown-Vorrichtung 34. Bei dieser Kickdown-Vorrichtung 34 kann es sich um einen mechanischen Kickdown-Schalter handeln, wie er beispielsweise in der DE-A-100 31 097 der Anmelderin beschrieben ist, bei dem der zapfenförmige Stößelkörper 36 federgespeichert ist und durch eine Ausnehmung mit federgespeicherten Kugeln gedrückt wird.

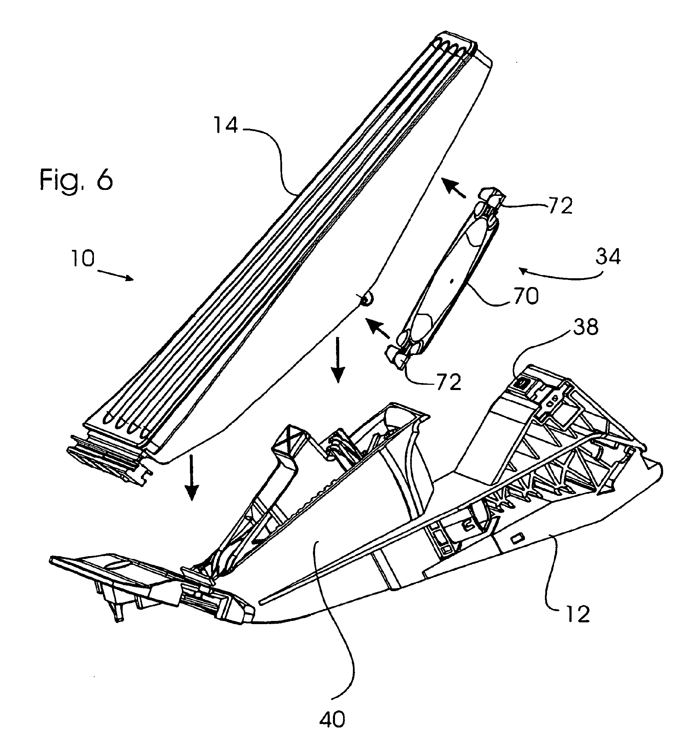

In der bevorzugten Ausführung ist, wie in Fig. 2 im Querschnitt und in Fig 6 als Explosionsdarstellung gezeigt, die Kickdown-Vorrichtung 34 als monostabile Schnappscheibe ausgebildet.

Am Pedalelement 14 wird eine Schnappscheibe 70 aufgenommen. Bei der Schnappscheibe 70 handelt es sich um ein aus Federblech gefertigtes flächiges Element mit einer ovalen Wölbung. An den langen Enden der gebildeten Ellipse sind an der Schnappscheibe 70 Halteelemente 72 ausgeformt, die in entsprechenden Halterungen an der Unterseite des Pedalteils 14 aufgenommen werden.

Bei Betätigung des Pedals bis zur Endstellung trifft die Schnappscheibe 70 auf den am Basiselement 12 gehaltenen Betätigungsstößel 38. Der Betätigungsstößel 38 drückt etwa auf die Mitte der ovalen Wölbung der Schnappscheibe 70. Die Schnappscheibe 70 setzt der Betätigung zunächst eine recht hohe Kraft entgegen, und springt dann nach Erreichen eines Schnappunktes reversibel um. Bei nachlassender Betätigung springt die Schnappscheibe 70 in die ursprüngliche Lage zurück.

Durch die Schnappscheibe 70 ergibt sich in der Kraft/Weg-Kennlinie der Betätigung des Pedalteils 14 eine Kraftspitze, d.h. eine für den Benutzer spürbare Gegenkraft, die bei einer exakt fühlbaren Schaltschwelle überwunden ist. Durch diese Schaltschwelle betätigt der Benutzer bewußt eine Schaltfunktion. Bei Automatikgetrieben ist dies der bekannte "Kickdown", der zusätzlich zum Vollgas auch ein Herunterschalten des Getriebes bewirkt. Ebenso könnten andere Schaltfunktionen hierdurch ausgelöst werden.

Bei der Ausführungsform gemäß Fig. 6 mit Schnappfeder ebenso wie bei einer alternativen Ausführung mit einem kugelgelagerten Stößel dient das jeweilige Kickdown-Element einzig dazu, die Schaltschwelle für den Benutzer fühlbar zu machen. Eine eigentliche elektrische Schaltfunktion bewirkt das jeweilige Kickdown-Element (kugelgelagerter Kickdown bzw. Schnappscheibe 70) jedoch nicht. Die Kickdown-Schaltfunktion wird in der elektronischen Steuereinheit ECU eines Kfz ausgelöst, sobald über den induktiven Sensor festgestellt wird, daß sich das Pedalteil 14 in der dem Kickdown-Bereich entsprechenden Stellung befindet.

Für die Funktion, d.h. das tatsächliche Auslösen des Kickdown, sind somit allein der Sensor und die elektronische Steuereinheit verantwortlich. Das jeweilige Kickdown-Element ist ein rein haptisches Element.

## Patentansprüche

1. Fahrpedal für ein Kfz mit
- einem Basisteil (12) zur festen Anordnung im Kfz.
- einem Pedalteil (14), das gegenüber dem Basisteil (12) um eine Pedal-Schwenkachse (S1) schwenkbar ist,
- und einem Hebelelement (22), das am Basisteil (12) an einem Achsteil (56) um eine Hebel-Schwenkachse (S₂) schwenkbar gelagert und so mit dem Pedalteil (14) gekoppelt ist, daß das Hebelelement (22) bei Rewegung des Pedalteils (14) gegenüber dem Basisteil (12) verschwenkt, wobei die Pedal-Schwenkachse (S1) parallel in Abstand zur Hebel-Schwenkachse (S2) angeordnet ist,
- wobei mindestens eine Rilckstellfeder (24) zur Rückstellung des Hebelelements (22) vorgesehen ist,
**gekennzeichnet durch**
- einen induktiven Sensor zur Ermittlung der Stellung des Pedalteils (14), mit einem am Basisteil (12) angeordneten Spulenschaltkreis (44) mit mindestens einer Sendespule und mindestens einer Empfangsepule, und mit einem Koppelelement (42), das sich bei Bewegung des Pedalteils (14) vor dem Spulenschaltkreis (42) bewegt,
- wobei an dem Hebelelement (22) das Koppelelement (42) befestige ist,
- und wobei das Hebelelement (22) **durch** die Rückstellfeder (24) gegen das Pedalteil (14) gedrückt wird und dort einseitig anliegt.

2. Fahrpedal nach Anspruch 1, bei dem
- das Koppelelement (42) am Ende des Hebelelements (22) angeordnet ist,
- und der Spulenschaltkreis (44) in der Verlängerung des Hebelelements (22) neben dem Koppelelement (42) angeordnet ist.

3. Fahrpedal nach einem der vorangehenden Ansprüche, bei dem
- das Pedalteil (14) am Basisteil (12) in einem Filmgelenk (16) schwenkbar gelagert ist.

4. Fahrpedal nach einem der vorangehenden Ansprüche, bei dem
- das Achsteil (56) am Basisteil (12) angeordnet ist,
- und am Hebelelement (22) eine Aufnahmebuchse (58, 60) gebildet ist, die das Achsteil (56) mindestens teilweise umgreift.
- wobei die Aufnahmebuchse mindestens einen ersten Buchsenteil (58) und einen zweiten Buchsenteil (60) umfaßt,
- wobei die Buchsenteile (58, 60) so gegeneinander verspannt sind, daß sie das Achsteil (56) einklemmen.

5. Fahrpedal nach einem der vorangehenden Ansprüche, bei dem
- der Spulcnschaltkreis (44) Teil eines Sensormoduls (48) ist, wobei das Sensormodul (48) ein Steckergehäuse (20) für einen Anschlußstecker aufweist, und der Spulenschaltkreis (44) mit Kontakten (52) des Anschlußsteckers verbunden ist.

6. Fahrpedal nach Anspruch 5, bei dem
- das Sensormodul (48) eine Ansteuerungs- und Auswertungselektronik für den Spulenschaltkreis aufweist.

7. Fahrpedal nach einem der Anspruche 5, 6, bei dem
- der Spulenschaltkreis (44) eine Leiterplatte umfasst,
- und der Stecker (20) winklig zur Leiterplatte (44) angeordnet ist.

8. Fahrpedal nach einem der Anspruche 5-7, bei dem
- flache Metallstege (52) , die zum Teil in Kunststoffmaterial eines Gehäuses (50) eingebettet sind, als elektrische Verbindung zwischen der Leiterplatte (44) und dem Stecker (20) vorgesehen sind.

9. Fahrpedal nach Anspruch 8, bei dem
- zwei Gruppen von parallel zueinander angeordneten Metallstegen (53a, 53b) vorgesehen sind,
- wobei die Metallstege (53a, 53b) jeder Gruppe im Wesentlichen gleiche Form aufweisen.

## Claims

1. An accelerator pedal for a motor vehicle, having
- a base part (12) for fixed disposition in the vehicle,
- a pedal part (14) which is rotatable with respect to the base part (12), around a pedal rotation axis (S1), and
- a lever element (22) which is rotatably mounted at the base part (12) on an axis part (56) so as to be rotatable around a lever rotation axis (S2), which lever element is coupled to the pedal part (14) in a manner such that when the pedal part (14) is moved with respect to the base part (12) the lever element (22) is rotated, wherein the pedal rotation axis (S1) is disposed parallel to and at a distance from the lever rotation axis (S2),
- wherein at least one restoring spring (24) is provided for restoring the lever element (22), **characterized by**
- an inductive sensor for determining the position of the pedal part (14), with a coil circuit (44) disposed on the base part (12), having at least one transmitting coil and at least one receiving coil, and having a coupling element (42) which, when the pedal part (14) is moved, moves in front of the coil circuit (42),
- wherein the coupling element (42) is fixed to the lever element (22), and
- wherein the lever element (22) is pressed against the pedal part (14) by the restoring spring (24) and rests against the pedal part on one side.

2. The accelerator pedal according to claim 1, wherein
- the coupling element (42) is disposed on the end of the lever element (22), and
- the coil circuit (44) is disposed in the extension of the lever element (22), next to the coupling element (42).

3. The accelerator pedal according to one of the preceding claims, wherein
- the pedal part (14) is rotatably mounted on the base part (12) in an integral hinge (16).

4. The accelerator pedal according to one of the preceding claims, wherein
- the axis part (56) is disposed on the base part (12), and
- an accommodating bushing (58, 60) is formed on the lever element (22), which bushing at least partially surrounds the axis part (56),
- wherein the accommodating bushing comprises at least one first bushing part (58) and a second bushing part (60), and
- wherein the bushing parts (58, 60) are stressed with respect to each other in a manner such that they exercise a clamping action on the axial part (56).

5. The accelerator pedal according to one of the preceding claims, wherein
- the coil circuit (44) is a part of the sensor module (48), wherein the sensor module (48) has a plug housing (20) for a connecting plug, and the coil circuit (44) is connected to contacts (52) of the connecting plug.

6. The accelerator pedal according to claim 5, wherein
- the sensor module (48) has control and evaluation electronics for the coil circuit.

7. The accelerator pedal according to one of claims 5 and 6, wherein
- the coil circuit (44) comprises a printed circuit board, and
- the plug (20) is disposed at an angle to the printed circuit board (44).

8. The accelerator pedal according to one of claims 5-7, wherein
- flat metal leg elements (52) which are in part embedded in the plastic material of a housing (50) are provided, to furnish an electrical connection between the printed circuit board (44) and the plug (20).

9. The accelerator pedal according to claim 8, wherein
- two groups of mutually parallel metal leg elements (53a, 53b) are provided,
- wherein the metal leg elements (53a, 53b) of each group have essentially the same configuration.

## Revendications

1. Pédale d'accélération pour automobile comprenant
- une partie de base (12) pour la disposition fixe dans l'automobile,
- une partie de pédale (14) qui peut pivoter par rapport à la partie de base (12) autour d'un axe de pivotement de pédale (S1),
- et un élément de levier (22) qui est logé sur la partie de base (12) de manière à pouvoir pivoter sur une partie axiale (56) autour d'un axe de pivotement de levier (S2) et est raccordé à la partie de pédale (14), de telle sorte que l'élément de levier (22) pivote par rapport à la partie de base (12) lors du mouvement de la partie de pédale (14), dans laquelle l'axe de pivotement de pédale (S1) est disposé parallèlement à distance de l'axe de pivotement de levier (S2),
- dans laquelle au moins un ressort de rappel (24) est prévu pour rappeler l'élément de levier (22),
**caractérisée par**
- un capteur inductif pour déterminer la position de la partie de pédale (14), comprenant un circuit de commutation à bobine (44) disposé sur la partie de base (12) comprenant au moins une bobine d'envoi et au moins une bobine de réception, et comprenant un élément de raccordement (42) qui se déplace devant le circuit de commutation à bobine (42) lors du mouvement de la partie de pédale (14),
- dans laquelle l'élément de raccordement (42) est fixé à l'élément de levier (22),
- et dans laquelle l'élément de levier (22) est pressé contre la partie de pédale (14) par le ressort de rappel (24) et y repose d'un côté.

2. Pédale d'accélération selon la revendication 1, dans laquelle
- l'élément de raccordement (42) est disposé à l'extrémité de l'élément de levier (22),
- et le circuit de commutation à bobine (44) est disposé dans le prolongement de l'élément de levier (22) près de l'élément de raccordement (42).

3. Pédale d'accélération selon l'une quelconque des revendications précédentes, dans laquelle
- la partie de pédale (14) est logée sur la partie de base (12) de manière à pouvoir pivoter dans une articulation à film (16).

4. Pédale d'accélération selon l'une quelconque des revendications précédentes, dans laquelle
- la partie axiale (56) est disposée sur la partie de base (12),
- et une douille de réception (58, 60) est formée sur l'élément de levier (22), laquelle entoure au moins partiellement la partie axiale (56),
- dans laquelle la douille de réception comprend au moins une première partie de douille (58) et une seconde partie de douille (60),
- dans laquelle les parties de douille (58, 60) sont gauchies l'une contre l'autre, de telle sorte qu'elles coincent la partie axiale (56).

5. Pédale d'accélération selon l'une quelconque des revendications précédentes, dans laquelle
- le circuit de commutation à bobine (44) fait partie d'un module de capteur (48), dans laquelle le module de capteur (48) présente un logement de fiche (20) pour une fiche de raccordement et le circuit de commutation à bobine (44) est relié à des contacts (52) de la fiche de raccordement.

6. Pédale d'accélération selon la revendication 5, dans laquelle
- le module de capteur (48) présente un système électronique de commande et d'évaluation pour le circuit de commutation à bobine.

7. Pédale d'accélération selon l'une quelconque des revendications 5, 6, dans laquelle
- le circuit de commutation à bobine (44) comprend une carte de circuits imprimés,
- et la fiche (20) est disposée à un angle par rapport à la carte de circuits imprimés (44).

8. Pédale d'accélération selon l'une quelconque des revendications 5 à 7, dans laquelle
- des traverses métalliques plates (52) qui sont encastrées en partie dans le matériau en plastique d'un logement (50), sont prévues comme connexion électrique entre la carte de circuits imprimés (44) et la fiche (20).

9. Pédale d'accélération selon la revendication 8, dans laquelle
- deux groupes de traverses métalliques disposées parallèlement l'une à l'autre (53a, 53b) sont prévus,
- dans laquelle les traverses métalliques (53a, 53b) de chaque groupe présentent une forme sensiblement identique.
